# EUROPÄISCHE PATENTSCHRIFT

(11) **EP 2 939 775 B1**
(45) Veröffentlichungstag und Bekanntmachung des Hinweises auf die Patenterteilung: **31.08.2016**
(21) Anmeldenummer: 15164628.8
(22) Anmeldetag: 22.04.2015
(51) Int. Cl.: B23C 3/02, B23C 3/12, B29C 37/04, B24B 9/00

(54) **BEARBEITUNGSVORRICHTUNG FÜR ROHRMANTELFLÄCHEN**
PROCESSING DEVICE FOR PIPE JACKET SURFACES
DISPOSITIF DE TRAITEMENT DE SURFACES DE GAINES TUBULAIRES

(30) Priorität: 28.04.2014 DE 102014006255
(43) Veröffentlichungstag der Anmeldung: 04.11.2015
(73) Patentinhaber: PF Schweisstechnologie GmbH, 36304 Alsfeld (DE)
(72) Erfinder: Merle, Dipl.-Ing. Bernd, 36304 Alsfeld (DE); Spychalski-Merle, Achim, 36304 Alsfeld (DE)
(74) Vertreter: Eisenführ Speiser

(56) Entgegenhaltungen:
- DE-A1- 2 315 132
- DE-A1-102004 031 756
- DE-U1- 29 603 667
- DE-U1-202007 016 022
- FR-A1- 2 782 938
- US-A1- 2013 111 764

## Beschreibung

Die Erfindung betrifft eine kettenartige Vorrichtung zum Bearbeiten einer Mantelfläche eines Gegenstands, insbesondere eines wenigstens annähernd zylindrischen Gegenstands, wie z.B. eines Rohres, gemäß dem Oberbegriff des Anspruchs 1. Eine solche Vorrichtung ist aus der US 2013/0111764 bekannt. Genauer betrifft die Erfindung eine Schälkette für rohrförmige Gegenstände, insbesondere Kunststoffrohre.

Die Oberflächen von Rohren, Kabeln oder zylindrischen Stangen müssen vor einer Weiterverarbeitung häufig bearbeitet werden. So ist es beispielsweise bei Kabeln notwendig, eine Isolationsschicht zu entfernen, während bei der Verschweißung von Kunststoffrohren vor dem Verschweißen die Oberfläche der Rohre abgeschabt werden muss. Hierbei wird eine Schicht in der Größenordnung von ca. 0,05 mm bis 0,3 mm (in Abhängigkeit von großen Rohren auch tiefer) in den miteinander zu verschweißenden Bereichen entfernt. Auf diese Weise werden Schmutzeinschlüsse aus dem Herstellungsprozess sowie alterungsbedingte Materialveränderungen, die beispielsweise durch UV-Schädigung oder Witterung an der Oberfläche auftreten können, entfernt, die sonst zu unzureichenden Schweißergebnissen führen würden. Rohrrollbundware weist herstellungsbedingt eine gewisse Ovalität auf, die auch bei Rohrstangenware durch längere Lagerungszeiten auftritt.

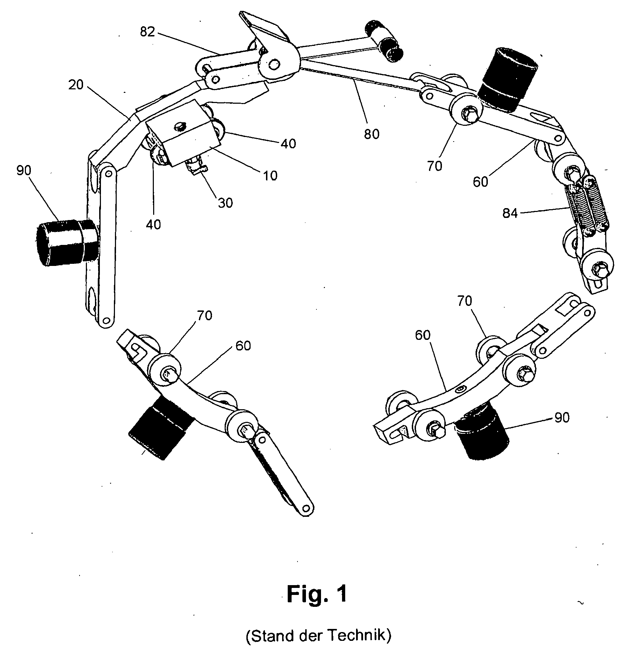

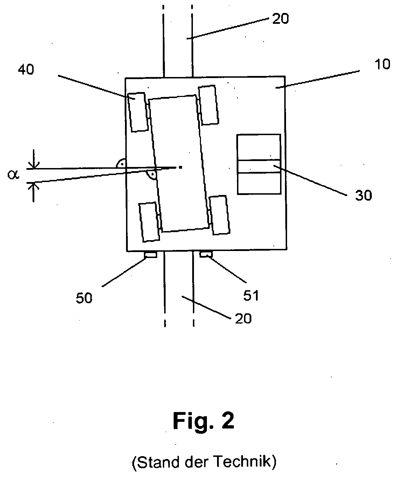

In der Praxis ist daher eine Bearbeitungsvorrichtung in kettenartiger Form bekannt, auch Schälkette genannt, die in den Fig. 1 und 2 gezeigt ist. Fig. 1 zeigt eine schematische Schrägansicht einer solchen herkömmlichen Schälkette. Die Schälkette weist ein Kettenglied 20 mit einem Werkzeugträger 10 und mehrere Kettenglieder 60 als Kettenverbindungsglieder auf, die ringartig um einen zu bearbeitenden Gegenstand, wie z.B. ein Rohr, gelegt und mittels einer Spannvorrichtung 80, 82 gespannt werden können, so dass der Werkzeugträger 10 fest auf der Mantelfläche aufliegt. Am Werkzeugträger ist ein Schälwerkzeug 30 befestigt, wie z.B. ein Schälmesser oder ein Hobeleinsatz, das die Manteloberfläche des Gegenstands mit einstellbarer Spandicke abträgt. Die Schälkette wird bei Benutzung von Hand mittels an der Kette angebrachter Griffe 90 in Umfangsrichtung um den Gegenstand umlaufend bewegt, so dass die Mantelfläche im Wesentlichen ringförmig bzw. schraubenlinienförmig abgetragen wird. Wie in Fig. 1 gezeigt, kann die Spannvorrichtung z.B. einen Spanngurt 80 und ein Gurtschloss 82 aufweisen, wobei optional eine Federeinrichtung 84 vorgesehen sein, kann, die einen elastischen Längenausgleich der Kettenlänge bewirkt und die Einstellung der Kettenspannung auf einen optimalen Wert erleichtert. Eine nicht gezeigte Spannungsanzeigevorrichtung kann z.B. an der Federeinrichtung 84 vorgesehen sein, um die Kettenspannung anzuzeigen.

Fig. 2 zeigt eine schematische Draufsicht auf die Unterseite des Werkzeugträgers 10 der herkömmlichen Schälkette der Fig. 1. Wie in Fig. 1 gezeigt ist, weisen die Kettenglieder 60 mehrere paarweise angeordnete Laufrollen 70 auf, mit denen sie auf der Mantelfläche des zu bearbeitenden Gegenstands abrollen. Der Werkzeugträger 10 weist Vorschubrollen 40 auf, vorzugsweise zwei Paare von Vorschubrollen. Wie in Fig. 2 gezeigt ist, sind die Achsen der Vorschubrollen 40 mittels Einstellschrauben 50, 51 gegenüber dem Werkzeugträger 10 und somit gegenüber der Rohrachse um einen einstellbaren Winkel verschwenkbar, um schräg zu der um einen Umfangskreis der Mantelfläche gespannten Schälkette abzurollen und die Schälkette somit während eines Umlaufs allmählich ein Stück längs der Rohrachse vorzurücken. Dazu weisen die Vorschubrollen 40 eine Oberfläche mit erhöhter Haftfähigkeit auf, wie z.B. eine geriffelte Oberfläche, um den Vorschub zu erzwingen und nicht schräg zur Laufrollenachse über die Mantelfläche zu gleiten. Auf diese Weise wird das Werkzeug 30 in einer Schraubenlinie um die Mantelfläche des Rohrs geführt, um bei richtiger Einstellung des Vorschubs die Mantelfläche lückenlos zu bearbeiten. Der Vorschub muss dazu so eingestellt sein, dass er kleiner als die Schneidbreite des Werkzeugs 30 ist, vorzugsweise kleiner als 3/4 der Schneidbreite. Das Einstellen des Vorschubs mittels der Verschwenkung der Vorschubrollenachsen erfordert sehr viel Erfahrung einer Bedienungsperson und ist zeitaufwändig, da der Vorschub überprüft und oft nachkorrigiert werden muss. Außerdem ist der Vorschub auf ein relativ kleines Maß begrenzt, da der Schwenkbereich der Vorschubrollenachsen gering ist, und weil u.a. auch die um den zu bearbeitenden Gegenstand gespannte Schälkette mit ihren anderen Laufrollen 70 weiterhin in Umfangsrichtung ausgerichtet ist und somit die Laufrollen 70 durch den axialen Vorschub schräg zu ihrer Abrollrichtung über die Mantelfläche gleiten müssen, was den Vorschub in axialer Richtung hemmt.

Es ist daher die Aufgabe der vorliegenden Erfindung, eine verbesserte Bearbeitungsvorrichtung nach dem Oberbegriff des Anspruchs 1 zu schaffen.

Diese Aufgabe wird erfindungsgemäß gelöst durch eine Bearbeitungsvorrichtung gemäß dem unabhängigen Anspruch 1. Vorteilhafte Weiterentwicklungen der erfindungsgemäßen Bearbeitungsvorrichtung sind in den abhängigen Ansprüchen definiert.

Die Erfinding schafft eine Bearbeitungsvorrichtung zum zumindest abschnittsweisen Bearbeiten der Mantelfläche eines wenigstens annähernd zylindrischen Gegenstands, mit einer Kette zum ringförmigen Umschließen des zu bearbeitenden Gegenstandes bestehend aus mindestens zwei gelenkig miteinander verbindbaren Kettengliedern, von denen eines ein Werkzeugträger ist, der wenigstens ein Werkzeug zum Bearbeiten der Mantelfläche und Laufrollen zum Abrollen auf der Mantelfläche aufweist, und das wenigstens eine weitere Kettenglied ein Kettenverbindungsglied ist, wobei die Kettenglieder so verbindbar sind, dass sie einen geschlossenen Kettenring um den zu bearbeitenden Gegenstand bilden, und mit einer Vorschubeinstelleinrichtung, die in der Lage ist, eine axiale Position von zueinander weisenden Enden zweier Kettenglieder parallel zur Achse des geschlossenen Kettenrings zueinander reversibel zu verstellen.

Durch diese relative axiale Verschiebung der zueinander weisenden Kettengliederenden nimmt der Kettenring die Form einer Schraubenlinie an, so dass alle Laufrollen des Werkzeugträgers und der Kettenverbindungsglieder in Richtung dieser Schraubenlinie ausgerichtet sind. Somit laufen alle Laufrollen, die auf der Oberfläche anliegen, in derselben Richtung ab und müssen nicht schräg zu ihrer Abrollrichtung über die Mantelfläche des zu bearbeitenden Gegenstands gleiten. Auf diese Weise ergibt sich vorteilhaft, dass alle aufliegenden Laufrollen des Kettenrings zum Vorschub beitragen, wodurch der Vorschub und auch die gesamte Umlaufbewegung des Kettenrings weniger Kraftaufwand erfordern und der Vorschub zuverlässiger, präziser und gleichmäßiger erfolgt. Als weiterer Vorteil ergibt sich, dass der Vorschub über einen erheblich größeren Bereich eingestellt werden kann, da wie bereits erwähnt die Laufrollen der Kettenverbindungsglieder ebenfalls zum Vorschub beitragen und diesen nicht hemmen, wie bei der herkömmlichen Schälkette. Zudem ist die Einstellung des Vorschubs sehr viel einfacher durchzuführen, wobei das Vorschubmaß pro Umlauf um den zu bearbeitenden Gegenstand leicht erkennbar ist und im Wesentlichen der Steigung der von dem Kettenring gebildete Schraubenlinie, d.h. der axialen Verschiebung der Kettengliederenden zueinander, entspricht. Das Einstellen des Vorschubs erfordert somit keine besondere Erfahrung der Bedienungsperson und muss in der Regel nicht mehr nachkorrigiert werden. Die Vorschubeinstelleinrichtung bewirkt vorzugsweise eine Verstellung der axialen Position der zueinander weisenden Enden des Werkzeugträgers und eines mit diesem verbundenen Kettenverbindungsglieds. Es ist jedoch gleichermaßen möglich, auch die zueinander weisenden Enden zweier Kettenverbindungsglieder axial zueinander zu verstellen. Die Vorschubeinstelleinrichtung kann ein separates Element sein, das beispielsweise zwischen den beiden Kettengliedern angeordnet wird, oder kann integral mit einem der Kettenglieder ausgebildet sein. Der Vorschub kann auch auf den Wert Null eingestellt werden, so dass sich bei einem Umlauf der Kette um den zu bearbeitenden Gegenstand kein Vorschub ergibt, was z.B. bei der Bearbeitung eines ringförmigen Wulsts (wie z.B. eines Schweißwulsts beim Heizelementstumpfschweißen von Kunststoffrohren) auf der Mantelfläche erforderlich ist, um diesen Wulst beispielsweise abzuhobeln und zu entfernen.

In einer bevorzugten weiterentwickelten Ausführungsform der Bearbeitungsvorrichtung weist die Kette mehrere Kettenverbindungsglieder auf. Hierdurch ist es möglich, die Kette an nahezu beliebige Rohrdurchmesser anzupassen.

In einer bevorzugten weiteren Weiterentwicklung der Bearbeitungsvorrichtung weist wenigstens ein Kettenverbindungsglied Laufrollen zum Abrollen auf der Mantelfläche des zu bearbeitenden Gegenstandes auf. Auf diese Weise kann die Kette leicht und gleichmäßig über die Mantelfläche rollen.

In einer optionalen Weiterentwicklung der Bearbeitungsvorrichtung ist die axiale Position der zueinander weisenden Enden der beiden Kettenglieder zueinander stufenlos einstellbar. Vorzugsweise kann die axiale Position der zueinander weisenden Enden der beiden Kettenglieder zueinander reversibel festlegbar sein.

Bei einer bevorzugten Weiterentwicklung der Bearbeitungsvorrichtung ist eine Mess- und Darstellungseinrichtung für die Einstellung der axialen Position der zueinander weisenden Enden der beiden Kettenglieder zueinander vorgesehen. Dadurch kann das Vorschubmaß besonders einfach auf einen bestimmten Wert eingestellt werden, der einfach z.B. an einer Skala ablesbar ist.

Gemäß einer besonders bevorzugten Ausführungsform der Bearbeitungsvorrichtung ist die Vorschubeinstelleinrichtung durch Führungsmittel an dem einen Kettenglied und durch Führungsgegenmittel an dem anderen Kettenglied gebildet, die ineinander greifen.

Optional ist das Ineinandergreifen der Führungsmittel und Führungsgegenmittel reversibel verriegelbar.

Vorzugsweise können die Führungsmittel und die Führungsgegenmittel an den zueinander weisenden Enden der beiden Kettenglieder vorgesehen sein.

In einer besonders bevorzugten Ausführungsform der Bearbeitungsvorrichtung sind die Führungsmittel durch eine sich parallel zur Achse des geschlossenen Kettenrings ersteckende Nut und die Führungsgegenmittel durch mindestens ein in die Führungsnut eingreifendes Führungsstück gebildet.

In einer bevorzugten Weiterentwicklung der Bearbeitungseinrichtung weist die Kette weiterhin mindestens eine Spanneinrichtung zum Anpassen der Umlauflänge der Bearbeitungsvorrichtung an den Umfang des zu bearbeitenden Gegenstands und/oder zum Einstellen des Anpressdrucks der Bearbeitungsvorrichtung auf die Mantelfläche auf. Die Spanneinrichtung kann vorzugsweise einen Spanngurt und ein Spannschloss umfassen, oder kann beispielsweise einen Gewindestangen-Mechanismus umfassen.

Optional kann die Spanneinrichtung Bestandteil des Werkzeugträgers sein. Alternativ kann die Spanneinrichtung auch Bestandteil des Kettenverbindungsglieds sein.

In einer bevorzugten Weiterentwicklung der Bearbeitungseinrichtung weisen der Werkzeugträger und/oder das Kettenverbindungsglied Griffe auf, mit denen die Bearbeitungsvorrichtung manuell in Umfangsrichtung des zu bearbeitenden Gegenstandes bewegbar ist.

In einer bevorzugten weiteren Weiterentwicklung der Bearbeitungsvorrichtung weisen der Werkzeugträger und/öder das Kettenverbindungsglied wenigstens eine Antriebsrolle auf, die von einer Antriebseinrichtung angetrieben werden kann, um die Bearbeitungsvorrichtung in Umfangsrichtung des zu bearbeitenden Gegenstandes zu bewegen. Auf diese Weise können ein besonders gleichmäßiger Umlauf der Kette um den zu bearbeitenden Gegenstand und ein besonders gleichmäßiger Vorschub erreicht werden, so dass unabhängig von der Bedienungsperson eine optimal gleichmäßige Bearbeitung der Mantelfläche möglich ist.

Der Werkzeugträger kann dafür konfiguriert sein, ein austauschbares feststehendes Werkzeug, insbesondere ein spanabhebendes Werkzeug, vorzugsweise in einstellbarer Lage über die Mantelfläche zu führen, um die Mantelfläche zu bearbeiten.

In besonders bevorzugten Ausführungsformen der Bearbeitungsvorrichtung kann der Werkzeugträger dafür konfiguriert sein, ein austauschbares motorbetriebenes Werkzeug, insbesondere ein rotierendes spanabhebendes Werkzeug, in der einstellbaren Lage über die Mantelfläche zu führen, um die Mantelfläche zu bearbeiten. Hierdurch kann eine besonders einfache Handhabung bei gleichzeitig optimiertem Bearbeitungsergebnis erzielt werden, wobei ein besonders niedriger Kraftaufwand erforderlich ist, um die Kette in Umlaufrichtung um den zu bearbeitenden Gegenstand zu bewegen, da das Werkzeug selbst eine sehr geringe Widerstandskraft entgegensetzt.

Gemäß einen bevorzugten Ausführungsform kann der Werkzeugträger eine Aufhängungseinrichtung für das motorbetriebene Werkzeug aufweisen, die in der Lage ist, das Werkzeug auf die Mantelfläche aufzusetzen und von dieser abzuheben und dabei eine Rotationsachse des motorbetriebenen Werkzeugs im Wesentlichen parallel zur Achse des geschlossenen Kettenrings zu halten.

Optional kann diese Aufhängungseinrichtung eine Federeinrichtung aufweisen, die das motorbetriebene Werkzeug elastisch in Richtung zur der Mantelfläche drängt.

In einer bevorzugten Weiterentwicklung der Bearbeitungsvorrichtung kann die Aufhängungseinrichtung eine Absenkeinrichtung aufweisen, die das motorbetriebene Werkzeug in kontrollierten Bewegungen von der Mantelfläche abheben und auf die Mantelfläche aufsetzen kann und eine unkontrollierte Absenkbewegung verhindert.

Optional kann die Aufhängungseinrichtung ferner in der Lage sein, das Werkzeug zusätzlich um eine in Tangentialrichtung zur Mantelfläche verlaufende Achse zu kippen.

Weitere vorteilhafte Ausgestaltungen sowie ein Ausführungsbeispiel werden nachstehend im Zusammenhang mit der Beschreibung einer Ausführungsform in Verbindung mit den beigefügten Zeichnungsfiguren näher erläutert. Die bei der Beschreibung des Ausführungsbeispiels verwendeten Begriffe "oben", "unten", "links" und "rechts" beziehen sich auf die Zeichnungsfiguren in einer Ausrichtung mit normal lesbaren Bezugszeichen und Figurenbezeichnungen. Dabei zeigen:
- Fig. 1: eine schematische Schrägansicht einer Schälkette des Standes der Technik;
- Fig. 2: eine schematische Draufsicht auf die Unterseite des Werkzeugträgers des Standes der Technik gemäß Fig. 1;
- Fig. 3: eine schematische Schrägansicht einer Bearbeitungsvorrichtung gemäß einer bevorzugten Ausführungsform der Erfindung; und
- Fig. 4: eine weitere schematische Schrägansicht einer Bearbeitungsvorrichtung gemäß einer bevorzugten Ausführungsform der Erfindung.

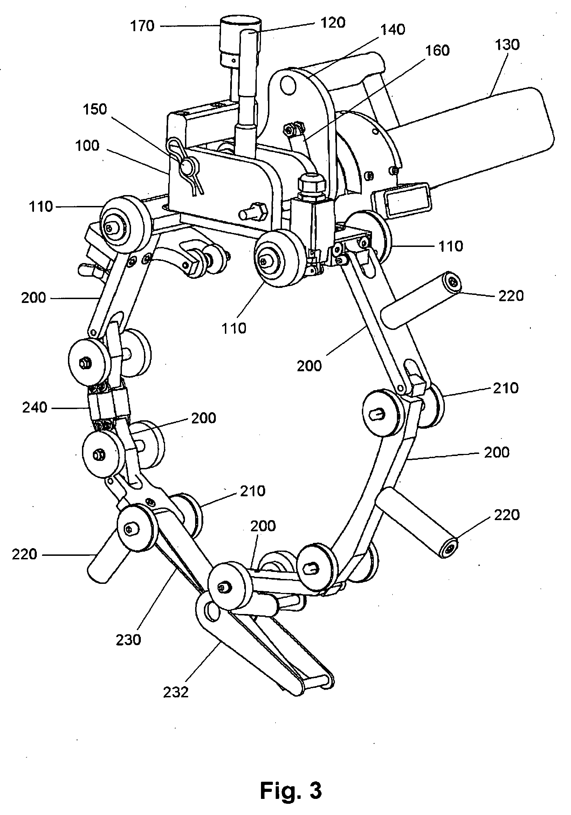

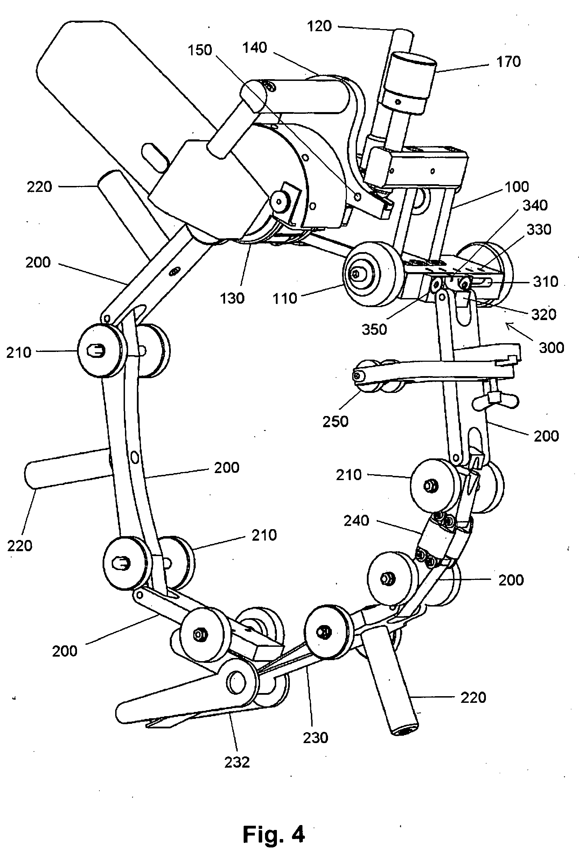

In einer besonders bevorzugten Ausführungsform der Erfindung, die in den Fig. 3 und 4 gezeigt ist, umfasst die Bearbeitungsvorrichtung eine Kette aus mindestens zwei Kettengliedern 100, 200, die gelenkig miteinander verbindbar sind, so dass sie einen geschlossenen Kettenring bilden und einen im Wesentlichen zylindrischen, zu bearbeitenden Gegenstand, wie z.B. ein Kunststoffrohr, ringförmig umschließen. Die zentrale Achse des geschlossenen Kettenrings fällt dann im Wesentlichen mit der Achse des Rohrs zusammen. Ein Kettenglied ist ein Werkzeugträger 100, der vorzugsweise zwei Paare an Laufrollen 110 zum Abrollen auf der Mantelfläche des Rohrs aufweist. Ein weiteres Kettenglied ist ein Kettenverbindungsglied 200. Vorzugsweise umfasst die Kette mehrere Kettenverbindungsglieder 200, die in beliebiger Anzahl hinzugefügt werden können, um die Kette an größere Rohrdurchmesser anzupassen, ähnlich wie bei der oben beschriebenen herkömmlichen Schälkette gezeigt ist. Die Kettenverbindungsglieder 200 weisen wenigstens teilweise ebenfalls Laufrollen 210 auf, um auf der Mantelfläche des Rohrs abzurollen. Ferner weist ein Kettenglied, vorzugsweise ein Kettenverbindungsglied 200, eine Spanneinrichtung auf, wie z.B. einen Spanngurt 230 und ein Spannschloss 232 ähnlich wie bei der oben beschriebenen herkömmlichen Schälkette, um die Umlauflänge des geschlossenen Kettenrings genauer an den Umfang des Rohrs anzupassen und den Kettenring mit einem einstellbaren Anpressdruck auf bzw. um die Mantelfläche zu spannen. In der in den Fig. 3 und 4 gezeigten Ausführungsform weist das unter dargestellte Kettenverbindungsglied 200 die Spanneinrichtung 230, 232 auf und ist mittels seines Spannschlosses 232 am Werkzeugträger 100 angelenkt. Zur einfacheren Einstellung des Anpressdrucks können an einem Kettenglied eine Federeinrichtung 240 (wie bei der herkömmlichen Schälkette) und eine vorteilhafterweise an der Federeinrichtung 240 ausgebildete (nicht gezeigte) Mess- und Darstellungseinrichtung, die die Spannung der Kette anzeigt, vorgesehen sein. Die Spanneinrichtung kann gleichzeitig auch lösbar sein und als Verschlusseinrichtung zum Öffnen und Schließen des Kettenrings dienen. Alternativ zu dem Spanngurt kann die Spanneinrichtung beispielsweise auch einen Gewindestangen-Mechanismus oder dergleichen mit einstellbarer Länge umfassen.

Wenn die Kettenglieder, d.h. der Werkzeugträger 100 und das wenigstens eine Kettenverbindungsglied 200, zu dem geschlossenen Kettenring verbunden sind, sind die Laufrollen 110, 210 aller Kettenglieder in derselben Laufrichtung ausgerichtet, nämlich in Umfangsrichtung des Kettenrings, um im Wesentlichen in Umfangsrichtung um die Mantelfläche des Rohrs abzurollen, so dass der Werkzeugträger 100 im Gebrauch um die Rohrachse umläuft. In der hier beschriebenen bevorzugten Ausführungsform sind wenigstens einige der Kettenverbindungsglieder 200 mit Griffen 220 versehen, mit deren Hilfe eine Bedienungsperson die Kette manuell in Laufrichtung, d.h. in Umfangsrichtung um die Rohrachse bewegen kann. Auch der Werkzeugträger 100 kann einen solchen Griff 110 aufweisen.

Der Werkzeugträger 100 dient in der bevorzugten Ausführungsform zum Tragen und Führen eines motorbetriebenen Hobels 130 in einer einstellbaren Lage zur Mantelfläche des Rohrs, um die Mantelfläche zu bearbeiten bzw. abzuschälen. Die Abtragungstiefe ist vorzugsweise einstellbar und kann durch das motorbetriebene Werkzeug bestimmt werden, das dazu entsprechend ausgebildet ist und beidseitig eines rotierenden Hobelwerkzeugs (Messerwalze) Führungselemente aufweisen kann, wie beispielsweise in der Patentanmeldung DE 10 2010 047 859 A1 genauer beschrieben ist.

In der in den Fig. 3 und 4 gezeigten bevorzugten Ausführungsform ist das Werkzeug 130 mittels einer Aufhängungseinrichtung an dem Werkzeugträger 100 gelagert. Die Aufhängungseinrichtung ist in der Lage, bei um das zu bearbeitende Rohr gespannter Bearbeitungsvorrichtung das Werkzeug 130 auf die Mantelfläche des zu bearbeitenden Gegenstands aufzusetzen und von der Mantelfläche abzuheben. Die Aufhängungseinrichtung weist eine zur zentralen Achse des Kettenrings im Wesentlichen parallele Lagerachse 150 und vorzugsweise eine Federeinrichtung 160 auf. Das motorbetriebene Werkzeug 130 weist vorzugsweise eine zur Rotationsachse des rotierenden Hobelwerkzeugs senkrecht stehende Seitenplatte 140 auf, die an der Lagerachse 150 des Werkzeugträgers 100 schwenkbar befestigt werden kann. Statt der gezeigten Seitenplatte kann auch ein anderes Element des motorbetriebenen Werkzeugs entsprechend an der Lagerachse 150 befestigt werden. Das rotierende Hobelwerkzeug 130 kann somit um die Achse 150 geschwenkt werden und der Mantelfläche des zu bearbeitenden Gegenstands genähert oder von dieser abgehoben werden, wobei die Rotationsachse des Hobelwerkzeugs 130 im Wesentlichen parallel zur Rohrachse bzw. zur zentralen Achse des Kettenrings gehalten wird. Die optionale Federeinrichtung kann eine Spannfeder 160 umfassen und kann mit der schwenkbar gelagerten Seitenplatte 140 in Eingriff gebracht werden, um diese elastisch in Richtung zur Mantelfläche zu drängen, so dass das Werkzeug 130 in einer Arbeitsstellung mit einer im Wesentlichen konstanten Kraft auf die Mantelfläche gedrückt wird.

Um eine einfache Handhabung, ein sicheres Anlegen der Bearbeitungsvorrichtung um dem zu bearbeitenden Gegenstand und ein gefahrloses Starten des motorbetriebenen rotierenden Hobelwerkzeugs 130 zu erleichtern, weist die Aufhängungseinrichtung vorzugsweise eine Absenkeinrichtung zum kontrollierten Absenken des Werkzeugs 130 auf die Mantelfläche auf. Die Absenkeinrichtung umfasst in der gezeigten Ausführungsform eine Absenkschraube 170, die in einem im Werkzeugträger 100 ausgebildeten Gewinde sitzt und durch Drehen von der Bedienungsperson in ihrer Längsrichtung versetzt werden kann. Bei Drehung der Absenkschraube 170 in der einen Richtung wird das untere Ende der Absenkschraube 170 gegen einen abseits der Lagerachse 150 ausgebildeten Ansatz der Seitenplatte 140 gedrückt und somit durch eine Hebelwirkung das Werkzeug gegen die Federkraft der Spannfeder 160 geschwenkt und von der Mantelfläche abgehoben. Bei Drehung der Absenkschraube 170 in der anderen Richtung wird dementsprechend die Schwenkrichtung umgekehrt und das Werkzeug 130 durch die Federkraft der Spannfeder 160 in Richtung zur Mantelfläche geschwenkt, bis es auf dieser aufsitzt. Andere Absenkeinrichtungen zum kontrollierten Absenken des über die Aufhängungseinrichtung gelagerten Werkzeugs sind ebenfalls möglich, wie z.B. Schwenkhebel und Exzentervorrichtungen oder dergleichen. Vorteilhaft ist dabei, wenn diese Vorrichtungen eine kontrollierte bzw. wenigstens eine gedämpfte Bewegung der Aufhängungseinrichtung erzwingen und somit ein unkontrolliertes, zu schnelles oder ruckartiges Absenken und Aufsetzen verhindern.

Durch diese Aufhängungseinrichtung 150, 160, 170 wird eine sichere Inbetriebnahme der Bearbeitungsvorrichtung erleichtert, da das Werkzeug 130 erst gestartet und danach kontrolliert auf die Mantelfläche des zu bearbeitenden Gegenstands aufgesetzt werden kann, ohne dass die Gefahr eines Rückschlags besteht, der entstehen kann, wenn das Werkzeug im aufgesetzten Zustand eingeschaltet wird. Ferner wird durch die im Wesentlichen parallel zur Rohrachse geführte Rotationsachse des Werkzeugs und die konstante Druckkraft, mit der das Werkzeug auf der zu bearbeitenden Mantelfläche aufgesetzt wird, eine besonders zuverlässige und gleichmäßige Bearbeitung der Mantelfläche gewährleistet. In einer Abwandlung dieser Ausführungsform ist es auch möglich, die Spannfeder 160 wegzulassen und den Schwenkmechanismus der Aufhängungseinrichtung fest mit der Absenkeinrichtung zu koppeln (z.B. über eine Stange und Gelenke), so dass die Lage des Werkzeugs bezüglich des Werkzeugträgers durch die Stellung der Absenkeinrichtung genau bestimmt wird und kein federbelastetes Spiel aufweist. In einer weiteren Abwandlung der Ausführungsform ist es auch möglich einen linearen Schiebemechanismus (beispielsweise eine Nut und ein darin geführtes Gegenstück) statt des beschriebenen Schwenkmechanismus vorzusehen, um das motorbetriebene Werkzeug in Richtung zu der Mantelfläche und von dieser weg zu bewegen. Auch ein solcher Schiebemechanismus kann vorzugsweise federbelastet und mit der beschriebenen Absenkeinrichtung versehen sein.

In einer Weiterentwicklung der Erfindung ist die Aufhängungseinrichtung so ausgebildet, dass sie bei Bedarf zusätzlich ein Kippen des Werkzeugs 130 um eine in Tangentialrichtung der Mantelfläche verlaufende Kippachse ermöglicht, so dass die Rotationsachse des Werkzeugs 130 bezüglich der zentralen Achse des Kettenrings und somit bezüglich der Achse des zu bearbeitenden Rohres geneigt werden kann. Das Werkzeug 130 kann somit z.B. mittels einer weiteren Federeinrichtung auf eine nicht zylindrische bzw. kegelförmige Mantelfläche gedrückt werden, um auch diese zu bearbeiten. Solche im Wesentlichen kegelförmigen Mantelflächen können an den Enden eines zu bearbeitenden Rohrs vorkommen, falls ein Rohr dementsprechend bearbeitet oder ausgebildet wurde, oder falls das Rohr eingefallene Rohrenden aufweist. Die Aufhängungseinrichtung kann optional auch so ausgebildet sein, dass sie ein Fixieren der Werkzeugachse in einem bestimmten Kippwinkel ermöglicht. Auf diese Weise kann z.B. ein Rohrende mit einer Fase versehen werden, wenn das Werkzeug in einer derart verkippten Lage in Umfangsrichtung um das Rohrende geführt wird.

Wie oben erwähnt ist, kann anstelle des motorbetriebenen Werkzeugs 130 auch ein feststehendes Werkzeug, wie z.B. ein einstellbares Schälmesser, am Werkzeugträger befestigt sein, wie es in den Fig. 1 und 2 für die herkömmliche Schälkette dargestellt ist.

Wie in Fig. 4 genauer gezeigt ist, ist in einer von der Lagerung des Werkzeugs 130 am Werkzeugträger 100 völlig unabhängigen Ausgestaltung der bevorzugten Ausführungsform der Erfindung an dem Werkzeugträger 100 des Weiteren eine Vorschubeinstelleinrichtung 300 ausgebildet. Wie oben erwähnt kann die Vorschubeinstelleinrichtung aber gleichermaßen auch an einem Kettenverbindungsglied ausgebildet sein. Diese Vorschubeinstelleinrichtung 300 weist in der dargestellten bevorzugten Ausführungsform eine am Werkzeugträger ausgebildete Nut 310 als Führungsmittel und ein in die Nut 310 eingreifendes Führungsstück 320 als Führungsgegenmittel auf, das längs der Nut 310 beweglich ist. Die Nut 310 ist im Wesentlichen parallel zur zentralen Achse des geschlossenen Kettenrings ausgerichtet. Das Führungsstück 320 ist stufenlos in der Nut 310 beweglich und kann mittels einer nicht gezeigten Festlegungseinrichtung wie z.B. einer Klemmschraube in jeder Stellung an bzw. in der Nut festgelegt und wieder gelöst werden. An dem Führungsstück 320 ist bei geschlossenem Kettenring ein Kettenverbindungsglied 200 mit einem seiner Enden angelenkt. Das Führungsstück kann, wie in Fig. 4 dargestellt, auch fest an einem Kettenglied 200 angelenkt sein.

In einer bestimmten Stellung innerhalb der Nut, die eine Randstellung bzw. Endstellung an einem Ende der Nut 310 sein kann, ist das Führungsstück 320 in Laufrichtung des Werkzeugträgers 100 mit einem an der gegenüberliegenden Seite des Werkzeugträgers 100 angelenkten Ende eines weiteren Kettenverbindungsglied 200 fluchtend angeordnet. Das heißt, die axiale Position (die Position in Richtung der Achse des geschlossenen Kettenrings bzw. der Achse des zu bearbeitenden Gegenstands) des am Führungsstück 320 angelenkten Endes des Kettenverbindungsglieds 200 ist gleich der axialen Position des zugewandten Endes des Werkzeugträgers 100 (d.h. der Verlängerung der Fluchtlinie des am gegenüberliegenden Ende des Werkzeugträgers angelenkten weiteren Kettenverbindungsglieds), so dass der geschlossene Kettenring einen Kreisring ohne axialen Versatz bildet. Mit anderen Worten, der Kettenring bildet eine Schraubenlinie mit der Steigung Null. In dieser Einstellung ist ein Vorschub gleich Null eingestellt, d.h. der Kettenring läuft auf einer Kreislinie der Mantelfläche um das Rohr, wobei alle Laufrollen 110, 210 der Kettenglieder 100, 200 im Wesentlichen in Richtung dieser Kreislinie ausgerichtet sind und entlang derselben abrollen. Auf diese Weise kann die Bearbeitungsvorrichtung z.B. verwendet werden, wie oben erwähnt ein Rohrende mit einer Fase zu versehen, oder um eine Schweißwulst zweier verschweißter Kunststoffrohre zu entfernen, die stumpf aufeinanderstoßend verschweißt sind. Hierzu kann ferner eine Wulstreiterrolle 250 an einem Kettenglied vorgesehen sein, die ein konvexes Profil aufweist und mit ihren beiden parallelen Laufflächen beidseitig des Wulsts auf der Mantelfläche abrollen kann. Dadurch kann die Bearbeitungsvorrichtung in einfacher Weise auf den Wulst ausgerichtet und längs desselben geführt werden.

In anderen, davon abweichenden Stellungen des Führungsstücks 320 innerhalb der Nut 310 ist das am Führungsstück 320 angelenkte Ende des Kettenverbindungsglieds 200 bezüglich des ihm zugewandten Endes des Werkzeugträgers 100 axial verschoben bzw. verstellt. Der Kettenring bildet dann eine Schraubenlinie mit einer Steigung gleich dem axialen Versatz der einander zugewandten Enden der Kettenglieder. Alle Laufrollen 110, 210 der Kettenglieder 100, 200 sind somit entlang dieser Schraubenlinie ausgerichtet und rollen entlang dieser Schraubenlinie auf der Mantelfläche des Rohrs ab. Bei einem vollständigen Umlauf ergibt sich somit ein Vorschub der Bearbeitungsvorrichtung in axialer Richtung ungefähr gleich dem axialen Versatz der einander zugewandten Enden der Kettenglieder an der Vorschubeinstelleinrichtung 300. Dabei tritt an den Laufrollen 110, 210 im Wesentlichen kein seitlicher bzw. axialer Schlupf auf und alle aufsitzenden Laufrollen tragen zum Vorschub bei. Auf diese Weise ergibt sich ein sehr zuverlässiger und gleichmäßiger Vorschub in axialer Richtung, wobei auch der Kraftaufwand für die Bewegung in Umfangsrichtung im Vergleich zur herkömmlichen Schälkette deutlich reduziert ist, da kein axiales Gleiten von Laufrollen quer zur Umfangsrichtung erzwungen werden muss. Es ist daher auch nicht erforderlich, gleichwohl aber möglich, Laufrollen mit einer geriffelten Oberfläche oder dergleichen auszubilden, um deren Haftung und seitliche Führungskraft auf der Oberfläche zu erhöhen, wie es bei der herkömmlichen Schälkette für die Laufrollen des Werkzeugträgers beschrieben ist. Wenn das Führungsstück 320 bei der Einstellung mit Vorschub gleich Null nicht am Ende der Nut 310 angeordnet ist, kann, je nach Richtung der axialen Verstellung des Führungsstücks 320, bei gleicher Umlaufrichtung des Kettenrings um das Rohr ein positiver Vorschub bzw. ein negativer Vorschub eingestellt werden, d.h. ein Vorschub wahlweise in beiden axialen Richtungen des Rohrs.

Die Vorschubeinstelleinrichtung 300 weist vorzugsweise außerdem eine Mess- und Darstellungseinrichtung auf die den eingestellten Vorschub misst und anzeigt, so dass die Bedienungsperson den Vorschub leicht einstellen und die Einstellung jederzeit leicht ablesen kann. Diese Mess- und Darstellungseinrichtung ist in der bevorzugten Ausführungsform, wie in Fig. 4 Gezeigt ist, durch eine Skala 330 an der Nut 310 verwirklicht, auf die eine Markierung 340 am Führungsstück 320 zeigt. Auf der Skala ist das Vorschubmaß vorzugsweise als einfaches Längenmaß z.B. in der Maßeinheit mm oder dergleichen angegeben, was der Steigung der von dem Kettenring gebildeten Schraubenlinie und somit im Wesentlichen dem Vorschubmaß in axialer Richtung bei genau einem Umlauf der Bearbeitungsvorrichtung um das zu bearbeitende Rohr entspricht. Bei bekannter Schnittbreite des Werkzeugs 130 lässt sich somit besonders einfach ein geeigneter Vorschub von z.B. 3/4 der Schnittbreite einstellen.

Die Nut 310 der Vorschubeinstelleinrichtung 300 kann in Abwandlungen der dargestellten bevorzugten Ausführungsform auch an einem Kettenverbindungsglied 200 ausgebildet sein, wobei das Führungsstück 320 am Werkzeugträger 100 oder an einem weiteren Kettenverbindungsglied 200 angelenkt sein kann. An welcher Stelle des geschlossenen Kettenrings mittels der Vorschubeinstelleinrichtung ein axialer Versatz von zueinander weisenden Enden von Kettengliedern bewirkt wird, ist für die Funktion der Vorschubeinstelleinrichtung und die Funktion der Bearbeitungsvorrichtung gemäß der Erfindung nicht von Bedeutung.

## Patentansprüche

1. Bearbeitungsvorrichtung zum zumindest abschnittsweisen Bearbeiten der Mantelfläche eines wenigstens annähernd zylindrischen Gegenstands,
mit einer Kette (100, 200) zum ringförmigen Umschließen des zu bearbeitenden Gegenstandes bestehend aus mindestens zwei gelenkig miteinander verbindbaren Kettengliedern (100, 200), von denen eines ein Werkzeugträger (100) ist, der wenigstens ein Werkzeug (130) zum Bearbeiten der Mantelfläche und Laufrollen (110) zum Abrollen auf der Mantelfläche aufweist, und das wenigstens eine weitere Kettenglied ein Kettenverbindungsglied (200) ist, wobei die Kettenglieder (100, 200) so verbindbar sind, dass sie einen geschlossenen Kettenring um den zu bearbeitenden Gegenstand bilden, **gekennzeichnet durch**
eine Vorschubeinstelleinrichtung (300), die in der Lage ist, eine axiale Position von zueinander weisenden Enden zweier Kettenglieder parallel zur Achse des geschlossenen Kettenrings zueinander reversibel zu verstellen.

2. Bearbeitungsvorrichtung nach Anspruch 1,
wobei die Kette mehrere Kettenverbindungsglieder (200) aufweist.

3. Bearbeitungsvorrichtung nach Anspruch 1 oder 2,
wobei wenigstens ein Kettenverbindungsglied (200) Laufrollen (210) zum Abrollen auf der Mantelfläche des zu bearbeitenden Gegenstandes aufweist.

4. Bearbeitungsvorrichtung nach einem der vorhergehenden Ansprüche,
wobei die axiale Position der zueinander weisenden Enden der beiden Kettenglieder (100, 200) zueinander stufenlos einstellbar ist.

5. Bearbeitungsvorrichtung nach Anspruch 4,
wobei die axiale Position der zueinander weisenden Enden der beiden Kettenglieder (100, 200) zueinander reversibel festlegbar ist.

6. Bearbeitungsvorrichtung nach einem der vorhergehenden Ansprüche,
wobei die Vorschubeinstelleinrichtung (300) durch Führungsmittel (310) an dem einen Kettenglied (100) und durch Führungsgegenmittel (320) an dem anderen Kettenglied (200) gebildet ist, die ineinander greifen.

7. Bearbeitungsvorrichtung nach Anspruch 6,
wobei die Führungsmittel (310) und die Führungsgegenmittel (320) an den zueinander weisenden Enden der beiden Kettenglieden (100, 200) vorgesehen sind.

8. Bearbeitungsvorrichtung nach einem der Ansprüche 6 oder 7,
wobei die Führungsmittel (310) durch eine sich parallel zur Achse des geschlossenen Kettenrings ersteckende Nut und die Führungsgegenmittel (320) durch mindestens ein in die Führungsnut eingreifendes Führungsstück gebildet sind.

9. Bearbeitungsvorrichtung nach einem der vorangehenden Ansprüche,
wobei die Kette weiterhin mindestens eine Spanneinrichtung (230, 232) zum Anpassen der Umlauflänge der Bearbeitungsvorrichtung an den Umfang des zu bearbeitenden Gegenstands und/oder zum Einstellen des Anpressdrucks der Bearbeitungsvorrichtung auf die Mantelfläche aufweist.

10. Bearbeitungsvorrichtung nach einem der vorangehenden Ansprüche,
wobei der Werkzeugträger (100) und/oder das Kettenverbindungsglied (200) wenigstens eine Antriebsrolle aufweisen, die von einer Antriebseinrichtung angetrieben werden kann, um die Bearbeitungsvorrichtung in Umfangsrichtung des zu bearbeitenden Gegenstandes zu bewegen.

11. Bearbeitungsvorrichtung nach einem der vorhergehenden Ansprüche,
wobei der Werkzeugträger (100) dafür konfiguriert ist, ein austauschbares motorbetriebenes Werkzeug (130), insbesondere ein rotierendes spanabhebendes Werkzeug, in einstellbarer Lage über die Mantelfläche zu führen, um die Mantelfläche zu bearbeiten.

12. Bearbeitungsvorrichtung nach Anspruch 11,
wobei der Werkzeugträger (100) eine Aufhängungseinrichtung (150, 160, 170) für das motorbetriebene Werkzeug (130) aufweist, die in der Lage ist, das Werkzeug (130) auf die Mantelfläche aufzusetzen und von dieser abzuheben und dabei eine Rotationsachse des motorbetriebenen Werkzeugs (130) im Wesentlichen parallel zur Achse des geschlossenen Kettenrings zu halten.

13. Bearbeitungsvorrichtung nach Anspruch 12,
wobei die Aufhängungseinrichtung (150, 160, 170) eine Federvorrichtung (160) aufweist, die das motorbetriebene Werkzeug (130) elastisch in Richtung zur der Mantelfläche drängt.

14. Bearbeitungsvorrichtung nach Anspruch 12 oder 13,
wobei die Aufhängungseinrichtung (150, 160, 170) eine Absenkeinrichtung (170) aufweist, die das motorbetriebene Werkzeug (130) in kontrollierten Bewegungen von der Mantelfläche abheben oder auf die Mantelfläche aufsetzen kann und eine unkontrollierte Absenkbewegung verhindert.

15. Bearbeitungsvorrichtung nach einem der Ansprüche 12 bis 14,
wobei die Aufhängungseinrichtung (150, 160, 170) ferner in der Lage ist, das Werkzeug (130) zusätzlich um eine in Tangentialrichtung zur Mantelfläche verlaufende Achse zu kippen.

## Claims

1. A machining device for machining the lateral surface of an at least approximately cylindrical object in portions thereof at least,
comprising a chain (100, 200) for annularly surrounding the object to be machined, said chain consisting of at least two hingedly connectable chain links (100, 200), one of which being a tool holder (100) having at least one tool (130) for machining the lateral surface and support rollers (110) for rolling on the lateral surface, and the at least one other chain link being a chain connecting link (200), the chain links (100, 200) being connectable in such a way that they form a closed chain ring around the object to be machined, **characterised by**
a feed adjuster (300) capable of reversibly adjusting an axial position of facing ends of two chain links parallel to the axis of the closed chain ring relative to each other.

2. The machining device according to claim 1,
wherein the chain has a plurality of chain connecting links (200).

3. The machining device according to claim 1 or 2,
wherein at least one chain connecting link (200) has support rollers (210) for rolling on the lateral surface of the object to be machined.

4. The machining device according to any one of the preceding claims,
wherein the axial position of the facing ends of the two chain links (100, 200) relative to each other is infinitely adjustable.

5. The machining device according to claim 4,
wherein the axial position of the facing ends of the two chain links (100, 200) relative to each other can be reversibly fixed.

6. The machining device according to any one of the preceding claims,
wherein the feed adjuster (300) is formed by guide means (310) on the one chain link (100) and by counter-guide means (320) on the other chain link (200), said means engaging each other.

7. The machining device according to claim 6,
wherein the guide means (310) and the counter-guide means (320) are provided at the facing ends of the two chain links (100, 200).

8. The machining device according to any one of claim 6 or 7,
wherein the guide means (310) is formed by a guide groove extending parallel to the axis of the closed chain ring and the counter-guide means (320) is formed by at least one guide piece which engages in said guide groove.

9. The machining device according to any one of the preceding claims,
wherein the chain has at least one tensioning device (230, 232) for matching the circumferential length of the machining device to the circumference of the object to be machined and/or for adjusting the pressure with which the machining device is pressed onto the lateral surface.

10. The machining device according to any one of the preceding claims,
wherein the tool holder (100) and/or the chain connecting link (200) have at least one drive roller which can be driven by a drive means in order to move the machining device in the circumferential direction of the object to be machined.

11. The machining device according to any one of the preceding claims,
wherein the tool holder (100) is configured to guide a replaceable stationary tool (130), in particular a machining tool, preferably in an adjustable position, over the lateral surface in order to machine the lateral surface.

12. The machining device according to claim 11,
wherein the tool holder (100) has a suspension device (150, 160, 170) for the motor-driven tool (130), said suspension device being capable of lowering the tool (130) onto the lateral surface and lifting it from the latter, thereby keeping a rotational axis of the motor-driven tool (130) substantially parallel to the axis of the closed chain ring.

13. The machining device according to claim 12,
wherein the suspension device (150, 160, 170) includes a spring assembly (160) which pushes the motor-driven tool (130) elastically toward the lateral surface.

14. The machining device according to claim 12 or 13,
wherein the suspension device (150, 160, 170) includes a lifting and lowering device (170) which can lift the motor-driven tool (130) in controlled movements off the lateral surface or lower it onto the lateral surface and which prevents uncontrolled lowering.

15. The machining device according to any one of claims 12 to 14,
wherein the suspension device (150, 160, 170) is further capable of tilting the tool (130) additionally about an axis extending tangentially to the lateral surface.

## Revendications

1. Dispositif d'usinage pour usiner, au moins par endroit, la surface latérale d'un objet, au moins à peu près cylindrique,
comprenant une chaîne (100, 200) pour entourer annulairement l'objet à usiner, constituée d'au moins deux maillons (100, 200) pouvant être articulés entre eux, dont l'un est un porte-outil (100), qui a au moins un outil (130) pour usiner la surface latérale et des galets (110) de roulement pour rouler sur la surface latérale, et le au moins un autre maillon est un maillon (200) de liaison, les maillons (100, 200) pouvant être reliés de manière à former un anneau de chaîne fermé autour de l'objet à usiner, **caractérisé par**
un dispositif (300) de réglage d'avance, qui est en mesure de décaler réversiblement l'une par rapport à l'autre, parallèlement à l'axe de l'anneau de chaîne fermé, une position axiale d'extrémité, tournée l'une vers l'autre, de deux maillons.

2. Dispositif d'usinage suivant la revendication 1,
dans lequel la chaîne a plusieurs maillons (200) de liaison.

3. Dispositif d'usinage suivant la revendication 1 ou 2,
dans lequel au moins un maillon (200) de liaison a des galets (210) de roulement pour rouler sur la surface latérale de l'objet à usiner.

4. Dispositif d'usinage suivant l'une des revendications précédentes,
dans lequel la position axiale des extrémités, tournées l'une vers l'autre, des deux maillons (100, 200) peut être réglée d'une manière continue l'une par rapport à l'autre.

5. Dispositif d'usinage suivant la revendication 4,
dans lequel la position axiale des extrémités tournées l'une vers l'autre des deux maillons (100, 200) peut être fixée de manière réversible l'une par rapport à l'autre.

6. Dispositif d'usinage suivant l'une des revendications précédentes,
dans lequel le dispositif (300) de réglage d'avance est formé par des moyens (310) de guidage sur l'un des maillons (100) et par des moyens (320) antagonistes de guidage sur l'autre maillon (200), qui pénètrent les uns dans les autres.

7. Dispositif d'usinage suivant la revendication 6,
dans lequel les moyens (310) de guidage et les moyens (320) antagonistes de guidage sont prévus sur les extrémités tournées l'une vers l'autre des deux maillons (100, 200).

8. Dispositif d'usinage suivant l'une des revendications 6 ou 7,
dans lequel les moyens (310) de guidage sont formés par une rainure s'étendant parallèlement à l'axe de l'anneau de chaîne fermé et les moyens (320) antagonistes de guidage par au moins une pièce de guidage pénétrant dans la rainure de guidage.

9. Dispositif d'usinage suivant l'une des revendications précédentes,
dans lequel la chaîne a, en outre, au moins un dispositif (230, 232) de serrage pour adapter la longueur du pourtour du dispositif d'usinage au pourtour de l'objet à usiner et/ou pour régler la pression appliquée par le dispositif d'usinage à la surface latérale.

10. Dispositif d'usinage suivant l'une des revendications précédentes,
dans lequel le porte-outil (100) et/ou le maillon (200) de liaison ont au moins un galet d'entraînement, qui peut être entraîné par un dispositif d'entraînement pour déplacer le dispositif d'usinage dans la direction du pourtour de l'objet à usiner.

11. Dispositif d'usinage suivant l'une des revendications précédentes,
dans lequel le porte-outil (100) est configuré pour guider sur la surface latérale en position réglable un outil (130) remplaçable entraîné par un moteur, notamment un outil tournant d'enlèvement de copeaux, afin d'usiner la surface latérale.

12. Dispositif d'usinage suivant la revendication 11,
dans lequel le porte-outil (100) a un dispositif (150, 160, 170) de suspension de l'outil (130) entraîné par un moteur, qui est en mesure d'appliquer l'outil (130) à la surface latérale et de l'en soulever et en même temps de maintenir un axe de rotation de l'outil (130) entraîné par un moteur sensiblement parallèle à l'axe de l'anneau de chaîne fermé.

13. Dispositif d'usinage suivant la revendication 12,
dans lequel le dispositif (150, 160, 170) de suspension a un dispositif (160) à ressort, qui repousse l'outil (130) entraîné par un moteur élastiquement en direction de la surface latérale.

14. Dispositif d'usinage suivant la revendication 12 ou 13,
dans lequel le dispositif (150, 160, 170) de suspension a un dispositif (170) d'abaissement, qui peut soulever de la surface latérale suivant des déplacements contrôlés l'outil (130) entraîné par un moteur ou l'appliquer sur la surface latérale et qui empêche un mouvement d'abaissement incontrôlé.

15. Dispositif d'usinage suivant l'une des revendications 12 à 14,
dans lequel le dispositif (150, 160, 170) de suspension est en mesure de faire basculer l'outil (130), en outre, autour d'un axe s'étendant dans une direction tangentielle par rapport à la surface latérale.
